# EUROPÄISCHE PATENTSCHRIFT

(11) **EP 3 493 293 B1**
(45) Veröffentlichungstag und Bekanntmachung des Hinweises auf die Patenterteilung: **12.08.2020**
(21) Anmeldenummer: 18202462.0
(22) Anmeldetag: 25.10.2018
(51) Int. Cl.: H01M 2/10, H01M 10/658, H01M 2/12, F16L 59/02, B32B 17/10, B32B 17/06, B32B 17/02, B32B 5/22

(54) **ISOLIERVERKLEIDUNG FÜR GEHÄUSE**
INSULATING FACING FOR HOUSING
REVÊTEMENT ISOLANT POUR BOÎTIERS

(30) Priorität: 30.11.2017 DE 202017107298 U
(43) Veröffentlichungstag der Anmeldung: 05.06.2019
(73) Patentinhaber: tmax Holding GmbH, 68169 Mannheim (DE)
(72) Erfinder: BAUM, Armin, 64668 Rimbach (DE); CAPPELLUCCI, Peter, 68199 Mannheim (DE)
(74) Vertreter: Wesch, Arno

(56) Entgegenhaltungen:
- WO-A1-2017/139826
- CN-U- 204 144 345
- GB-A- 2 545 921
- US-A1- 2015 151 510

## Beschreibung

Die Erfindung betrifft ein Gehäuse nach dem Oberbegriff des Patentanspruchs 1.

Die CN 204 144 345 U zeigt ein Gehäuse der genannten Art. Eine zweilagige Isolierverkleidung mit einem intumeszierenden Stoff ist aus der US 2015/0 151 510 A1 bekannt. Die WO 2017/139 826 A1 zeigt ein Gehäuse, in dem Batterien durch ein intumeszierendes Material thermisch isoliert sind.

In Fahrzeugen werden zunehmend Batterien eingesetzt, um die Fahrzeuge elektrisch zu betreiben. Die Batterien werden in möglichst wärmeresistenten oder feuerresistenten Batteriegehäusen aufgenommen, um diese beispielsweise im Fall eines von außen auf das Batteriegehäuse einwirkenden Feuers oder von außen einwirkender Wärme vor einer Entzündung zu schützen bzw. eine Brandausbreitung von innen nach außen zu verhindern, Batteriegehäuse können aus. Stahl oder Aluminium gefertigt sein. Andere Materialien sind ebenfalls für den Aufbau eines Batteriegehäuses denkbar.

Vor diesem Hintergrund ist aus der DE 101 34 145 B1 ein feuerhemmendes Batteriegehäuse bekannt geworden, dessen Wandung eine äußere Schicht aus Stahl aufweist. Das Batteriegehäuse weist eine innen liegende Schicht auf, in der ein thermisch aktives Material enthalten ist Das thermisch aktive Material wird durch die von außen einwirkende Wärme strukturell umgewandelt.

Konkret werden in der DE 101 34 415 B1 Zeolithe vorgeschlagen, die Kristallwasser abgeben und dadurch die Temperatur im Inneren des Batteriegehäuses auf ca. 100 °C halten, obwohl außen Temperaturen von 1000 °C herrschen. Zeolithe sind jedoch häufig körnig oder pulverförmig und daher nicht leicht zu verarbeiten.

Des Weiteren kann in der Praxis auch der Fall auftreten, dass eine Batterie sich entzündet und Flammen im Inneren des Batteriegehäuses entstehen. Dann wären die zuvor genannten Zeolithe einem Feuer direkt ausgesetzt und könnten durch den Einfluss von Flammen in ungünstiger Weise aus der Schicht herausrieseln. So könnten extrem heiße Stellen am Batteriegehäuse entstehen, an denen das Material des Batteriegehäuses der Hitze nicht mehr Stand halten könnte.

Insbesondere bei Batteriegehäusen aus Aluminium könnten bereits bei Temperaturen von über 660 °C Teile des Batteriegehäuses schmelzen.

Vor diesem Hintergrund besteht ein Bedarf nach einem Gehäuse, insbesondere Batteriegehäuse, das möglichst leicht zu fertigen, umzurüsten oder zu modifizieren ist, um im Fall einer Havarie oder des Auftretens einer exothermen Reaktion Stand zu halten.

Der Erfindung liegt vor diesem Hintergrund die Aufgabe zugrunde, eine Isolierverkleidung für Gehäuse, insbesondere Batteriegehäuse, anzugeben, welche es erlaubt, ein Gehäuse effektiv für möglichst jeglichen Fall einer Havarie oder des Auftretens einer exothermen Reaktion auszurüsten.

Die vorliegende Erfindung löst die genannte Aufgabe durch die Merkmale des Patentanspruchs 1.

Erfindungsgemäß ist zunächst erkannt worden, dass eine Isolierverkleidung, welche mindestens zwei Schichten umfasst, als Ganzes an eine innere Wandung eines Gehäuses, insbesondere Batteriegehäuses, anbringbar ist. Es müssen keine körnigen Materialien in aufwendiger Weise an eine innere Wandung angebracht werden.

Weiter ist erkannt worden, dass ein thermisch aktivierbares Material, welches unter Einwirkung von Wärme und/ oder Hitze und/ oder Feuer sein Volumen verändert, durch seine Expansion den Wärmeleitwert der gesamten Isolierverkleidung in günstiger Weise verändert. Der Wärmeleitwert wird erfindungsgemäß reduziert.

Schließlich ist erkannt worden, dass die Expansion das freie Volumen des Innenraums eines Gehäuses, insbesondere Batteriegehäuses, vorteilhaft verkleinert. Hierdurch wird das effektiv zur Verfügung stehende Brandvolumen verkleinert. Insoweit ist ein effektiver flammhemmender Aufbau innerhalb eines Gehäuses, insbesondere Batteriegehäuses, relativ problemlos erzeugbar.

Es könnte eine dritte Schicht vorgesehen sein, wobei die zweite Schicht zwischen der ersten Schicht und der dritten Schicht sandwichartig aufgenommen ist. Eine dritte Schicht kann durch die Expansion des thermisch aktivierbaren Materials von der ersten Schicht beabstandet werden. Die erste und die dritte Schicht werden insoweit thermisch voneinander entkoppelt, indem diese im Fall einer Havarie oder des Auftretens einer exothermen Reaktion räumlich voneinander beabstandet werden.

Mindestens eine Schicht könnte als Gewebe oder Matte ausgestaltet sein, welche Mineralfasern und/ oder nicht brennbare Fasern aufweist. Ein Gewebe oder eine Matte, die auch nicht gewoben sein kann, bildet eine gute Unterlage zum verliersicheren Aufbringen des thermisch aktivierbaren Materials. Das thermisch aktivierbare Material kann so leicht verarbeitet und an räumliche Gegebenheiten angepasst werden. Denkbar ist beispielsweise, das Gewebe oder die Matten zuzuschneiden, nachdem diese mit dem thermisch aktivierbaren Material beschichtet wurden.

Die erste Schicht könnte als Gewebe oder Matte aus Glasfasern oder hochtemperaturbeständigen Materialien ausgestaltet sein und die dritte Schicht oder weitere Schichten könnte bzw. könnten ebenfalls als Gewebe oder Matte aus Glasfasern oder hochtemperaturbeständigen Materialien ausgestaltet sein. Glasfasern sind wärmebeständig und/ oder brand- und/ oder hitzebeständig und gut verarbeitbar.

Mindestens eine dem Gehäuseinnenraum zugewandte Schicht könnte elektrisch nicht leitend sein. Alternativ oder zusätzlich könnte diese Schicht als elektrisch nicht leitende Folie ausgestaltet sein. Hierdurch ist sichergestellt, dass zwischen Batterien und der Isolierverkleidung kein elektrisch leitender Kontakt hergestellt wird, wenn das Gehäuse als Batteriegehäuse verwendet wird.

Das thermisch aktivierbare Material könnte als intumeszierendes Material ausgestaltet sein. Intumeszierendes Material zeigt ein besonders gutes Expansionsverhalten. Eine intumeszierende Schicht reagiert unter Wärmeeinwirkung und/ oder Feuereinwirkung und ist daher thermisch aktivierbar. Sie reagiert indem sie um ein Mehrfaches ihrer ursprünglichen Schichtdicke aufquillt. Hierbei baut die Schicht eine isolierende Schutzlage durch Verkohlung auf. Die Schicht, bzw. die Trägerschicht, auf der sie aufliegt, wird gegen Wärme- und/ oder Feuereinwirkung geschützt.

Im Gegensatz zu Brandschutzplatten oder aufspritzbaren Systemen auf Zementbasis, kann eine intumeszierende Schicht oder ein intumeszierender Lack dekorativ und schützend genutzt werden. Eine Konstruktion, auf welche die Schicht aufgetragen wird, wird nicht ungünstig beeinträchtigt.

Eine Intumeszenz wird üblicherweise durch mindestens drei Komponenten erreicht. Die erste Komponente ist eine Kohlenstoffquelle, wie beispielsweise Pentaerythrit oder Dipentaerythrit. Die zweite Komponente ist ein Treibmittel, wie beispielsweise Melamin und festes Chlorparaffin. Die dritte Komponente ist ein Mineralsäure-Katalysator, wie beispielsweise Ammoniumpolyphosphat.

Sobald eine intumeszierende Schicht erwärmt oder erhitzt wird, laufen mehrere chemische Reaktionen ab. Ammoniumpolyphosphat zerfällt und erzeugt Phosphorsäure. Phosphorsäure bewirkt eine Dehydratisierung von Pentaerythrit oder Dipentaerythrit und erzeugt eine kohlenstoffhaltige Lage. Das Treibmittel zerfällt unter Freisetzung von nicht brennbaren Gasen. Die Gase führen zur Aufschäumung der kohlenstoffhaltigen Lage. Hierdurch wird eine Schaumstruktur gebildet, die als Wärmeisolator hochwirksam ist.

Als intumeszierende Materialien, die beispielsweise ab ca. 200 bis 250 °C reagieren, indem sie um ein Mehrfaches ihrer ursprünglichen Schichtdicke aufquellen seien Blähgraphit und Vermikulit genannt.

Es könnten mehrere Schichten mit thermisch aktivierbarem Material vorgesehen sein. Hierdurch ist eine besonders starke Expansion bzw. Volumenzunahme der Isolierverkleidung ermöglicht.

Es könnten zwei Schichten mit thermisch aktivierbarem Material durch mindestens ein Gewebe oder eine Matte getrennt sein, wobei das Gewebe oder die Matte Mineralfasern und/ oder nicht brennbare Fasern aufweist. So können die trennenden Gewebe oder Matten zusätzlich als Wärmeisolatoren wirken und gleichzeitig die aufgequollenen Materialien gegen ein Zerfallen stabilisieren

Es könnte ein Klebemittel vorgesehen sein, mittels welchem die Isolierverkleidung an einer Wandung fixierbar ist, wobei das Klebemittel einer äußeren Schicht der Isolierverkleidung zugeordnet ist oder wobei das Klebemittel als eigenständige Lage ausgestaltet ist. Durch ein Klebemittel ist die Isolierverkleidung besonders vollflächig einer Wandung eines Gehäuses, insbesondere Batteriegehäuses, zuordenbar.

Vor diesem Hintergrund könnte das Klebemittel selbstklebend ausgestaltet sein. Alternativ oder zusätzlich könnte das Klebemittel als Hochtemperaturkleber ausgestaltet sein. Ein selbstklebendes Klebemittel erlaubt ein besonders schnelles Anordnen der Isolierverkleidung an der Wandung. Ein Hochtemperaturkleber hält die Isolierverkleidung auch nach längerer Branddauer noch zuverlässig an der Wandung fest.

Ein Gehäuse, welches mindestens eine innere Wandung umfasst, weist eine Isolierverkleidung der hier beschriebenen Art auf, wobei die Isolierverkleidung an der inneren Wandung angeordnet ist.

Ein solches Gehäuse, welches bevorzugt aus Aluminium, Stahl, Kunststoff oder Hochtemperaturkunststoff, gefertigt ist, ist effektiv gegen einen Fall einer Havarie oder des Auftretens einer exothermen Reaktion, von innen und von außen, geschützt. Das Gehäuse ist auf keine bestimmte Anwendung beschränkt und kann aus jeglichem geeigneten Material gefertigt sein.

Bevorzugt wird das Gehäuse in Fahrzeugen, insbesondere Kraftfahrzeugen, verwendet.

Das Gehäuse kann jedoch auch in Gebäuden, insbesondere im Hausbereich, verwendet werden.

Das Gehäuse könnte als Batteriegehäuse ausgestaltet sein. Im Gehäuseinnenraum des Batteriegehäuses sind Batterien anordenbar oder aufgenommen.

Das Gehäuse könnte einen Deckel aufweisen, an dessen innerer Wandung die lsollerverkleidung angeordnet ist. Im Brand- oder Havariefall reagiert die Isolierverkleidung an definierten Dichtkanten und dichtet zumindest über einen gewissen Zeitraum ab. Vor diesem Hintergrund könnte ein Schenkel einer Wand des Gehäuses unter Ausbildung einer Dichtkante oder einer Dichtfläche an der Isolierverkleidung anliegen, Im geschlossenen Zustand des Gehäuses presst dann der Schenkel gegen die im Brandfall intumeszierende oder intumeszierte Isolierverkleidung.

Zwischen einem Randbereich oder Randwulst des Deckels und einer Anlagefläche einer Wand des Gehäuses könnte eine IP-Dichtung angeordnet sein, Alternativ oder zusätzlich könnte die IP-Dichtung im
Gehäuse verklemmt oder verschraubt sein. Eine IP-Dichtung soll die Schutzklasse IP67 erfüllen und gegen Staub und Wasser abdichten.

Die IP-Dichtung kann aus einem Elastomer gefertigt sein. Wenn im Brandfall die IP-Djchtung zerstört oder zersetzt wird, kann die hier beschriebene Isolierverkleidung Dichtungsaufgaben übernehmen.

Das Gehäuse weist mindestens ein Ventil zum Druckausgleich und/ oder Drucküberlastabbau auf, welches ein intumeszierendes Material zum Verschließen einer Fluidleitung aufweist. Alternativ oder zusätzlich weist das Gehäuse mindestens eine Kabeldurchführung auf, welche ein intumeszierendes Material zum Verschließen eines Durchbruchs für ein Kabel aufweist. Ein Ventil zum Druckausgleich und/ oder Drucküberlastabbau kann Überdrücke im Inneren des Batteriegehäuses durch eine Fluidleitung in die Atmosphäre abbauen. Bevorzugt weist ein Ventil zum Druckausgleich und/ oder Drucküberlastabbau ein intumeszierendes Material auf, welches im Brandfall die Fluidleitung verschließt. Eine Kabeldurchführung kann ein Kabel von einer Kammer innerhalb des Gehäuses durch eine Kammerwand in eine andere Kammer führen. Eine Kabeldurchführung kann auch durch eine Außenwand eines Batteriegehäuses führen. Bevorzugt umfasst die Kabeldurchführung einen Dichtkörper, der einen Durchgang für das Kabel aufweist, wobei der Dichtkörper ein intumeszierendes Material aufweist oder aus einem solchen Material gefertigt ist. Im Brandfall kann der Dichtkörper den Durchbruch durch die Kammerwand oder Außenwand für das zersetzte oder verbrannte Kabel während eines gewissen Zeitraums feuerfest verschließen.

### In der Zeichnung zeigen

- Fig. 1: eine schematische Ansicht einer Isolierverkleidung, welche zwei Schichten aufweist, wobei einer äußeren Schicht zur Anlage an eine Wandung ein Klebemittel zugeordnet ist,
- Fig. 2: eine schematische Ansicht einer Isolierverkleidung, die drei Schichten aufweist, wobei zwei Gewebe aus Glasfasern eine mittlere Schicht mit thermisch aktivierbarem Material zwischen sich sandwichartig einschließen,
- Fig. 3: eine schematische Ansicht einer Isolierverkleidung, welche zwei Schichten mit thermisch aktivierbarem Material aufweist, die voneinander durch ein Gewebe aus Glasfasern getrennt sind,
- Fig. 4: eine schematische Ansicht eines Gehäuses mit einer inneren Wandung, an der eine Isolierverkleidung angeordnet ist,
- Fig. 5: ein Batteriegehäuse, welches Ventile zum Druckausgleich und/ oder Drucküberlastabbau und eine Kabeldurchführung aufweist,
- Fig. 6: eine Detailansicht der Kabeldurchführung gemäß Fig. 5,
- Fig. 7: eine Detailansicht eines Ventils zum Druckausgleich und/ oder Drucküberlastabbau gemäß Fig, 5,
- Fig. 8: eine Schnittansicht eines Deckels, dem eine Isolierverkleidung zugeordnet ist, und
- Fig. 9: eine Schnittansicht eines weiteren Deckels, dem eine Isolierverkleidung zugeordnet ist.

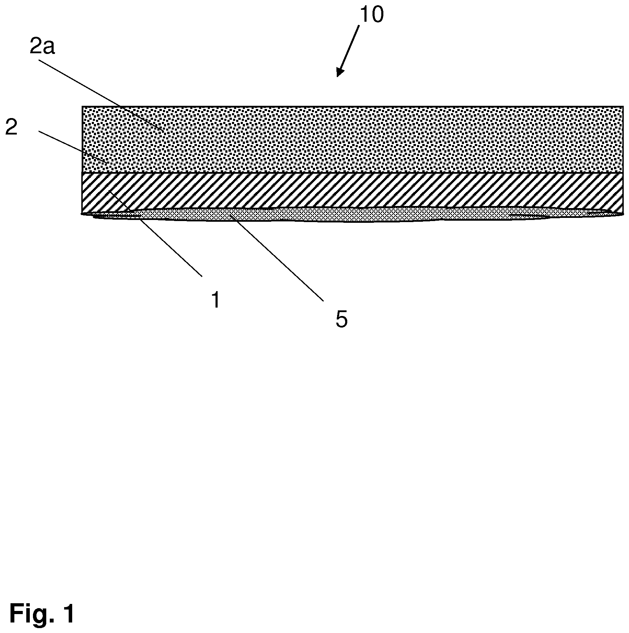

Fig. 1 zeigt eine Isolierverkleidung 10 zum Ausrüsten eines Gehäuses 6, umfassend mindestens zwei Schichten, wobei eine erste Schicht 1 mit einer zweiten Schicht 2 verbunden ist und wobei die zweite Schicht 2 ein thermisch aktivierbares Material 2a aufweist. Das thermisch aktivierbare Material 2a verändert unter Einwirkung von Wärme und/ oder Hitze und/ oder Feuer sein Volumen.

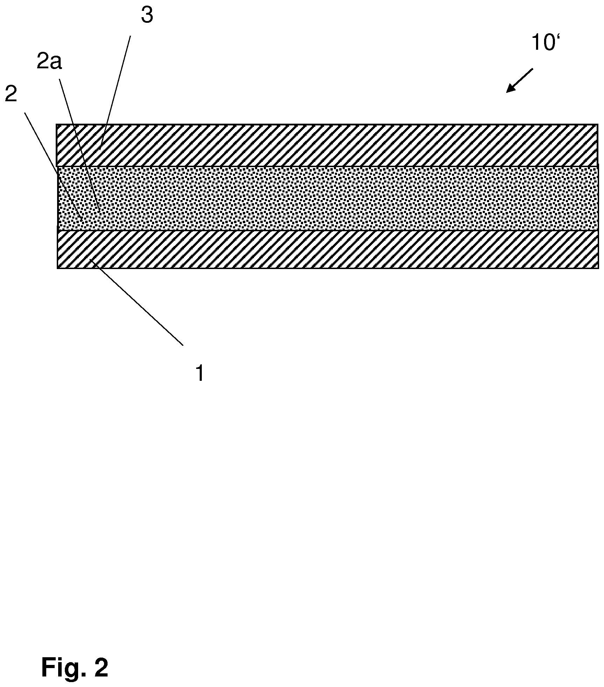

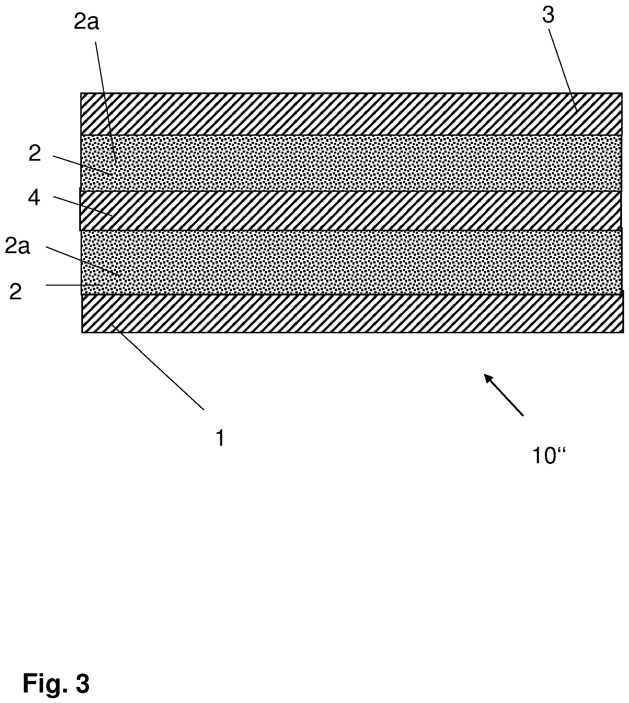

Fig. 2 und 3 zeigen je eine weitere Isolierverkleidung 10', 10", bei der eine dritte Schicht 3 vorgesehen ist, wobei die zweite Schicht 2 zwischen der ersten Schicht 1 und der dritten Schicht 3 sandwichartig aufgenommen ist.

Mindestens eine Schicht 1,3 ist als Gewebe ausgestaltet, welches Mineralfasern und nicht brennbare Fasern aufweist. Konkret ist in Fig. 1 und Fig. 2 die erste Schicht 1 als Gewebe aus Glasfasern ausgestaltet und ist in Fig. 2 auch die dritte Schicht 3 als Gewebe aus Glasfasern ausgestaltet.

In den Fig. 1 bis 3 ist das thermisch aktivierbare Material 2a als intumeszierendes Material ausgestaltet.

Es können auch mehrere Schichten 2 mit thermisch aktivierbarem Material 2a vorgesehen sein. Dies ist in Fig. 3 dargestellt. In Fig. 3 sind zwei Schichten 2 mit thermisch aktivierbarem Material 2a durch mindestens eine weitere Schicht 4, nämlich ein Gewebe, getrennt, wobei das Gewebe Mineralfasern und nicht brennbare Fasern, nämlich Glasfasern aufweist.

In Fig. 1 ist ein Klebemittel 5 vorgesehen, mittels welchem die Isolierverkleidung 10 an einer Wandung fixierbar ist, wobei das Klebemittel 5 einer äußeren Schicht, nämlich der ersten Schicht 1, der Isolierverkleidung 10 zugeordnet ist.

Das Klebemittel 5 ist selbstklebend ausgestaltet und als Hochtemperaturkleber ausgestaltet.

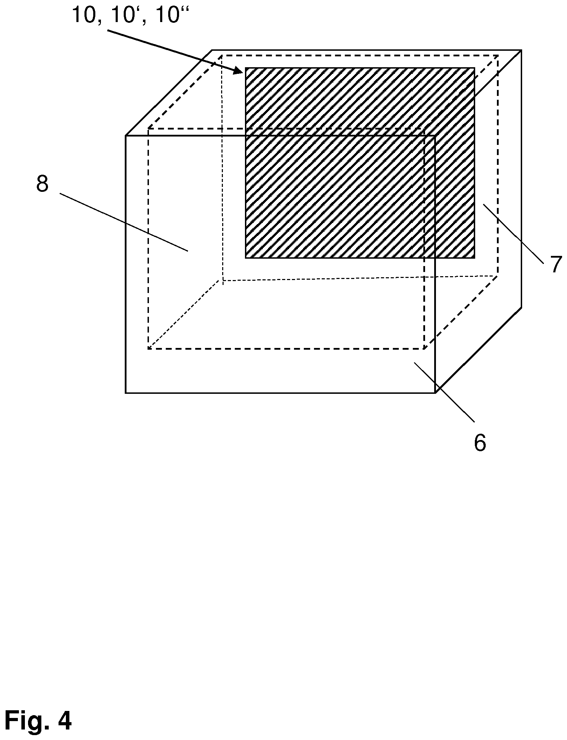

Fig. 4 zeigt ein Gehäuse 6, umfassend mindestens eine innere Wandung 7, wobei an der inneren Wandung 7 eine Isolierverkleidung angeordnet ist. Die Isolierverkleidung kann nach Art der in Fig. 1 bis 3 gezeigten Isolierverkleidungen 10, 10', 10" gefertigt sein. Das Gehäuse 6 ist aus Aluminium gefertigt, kann jedoch auch aus Stahl, Kunststoff oder Hochtemperaturkunststoff gefertigt sein.

Das Gehäuse 6 ist lediglich schematisch dargestellt und kann in vielen Bereichen Verwendung finden.

Bevorzugt ist das Gehäuse 6 jedoch als Batteriegehäuse ausgestaltet.

In diesem Verwendungsfall ist eine dem Gehäuseinnenraum 8 zugewandte Schicht 3 einer Isolierverkleidung elektrisch nicht leitend. Beispielhaft könnte die Isolierverkleidung 10' gemäß Fig. 2 oder die Isolierverkleidung 10" gemäß Fig. 3 so angeordnet sein, dass ihre dritte Schicht 3 nicht leitend ist und dem Gehäuseinnenraum 8 zugewandt ist, in welchem Batterien angeordnet sind.

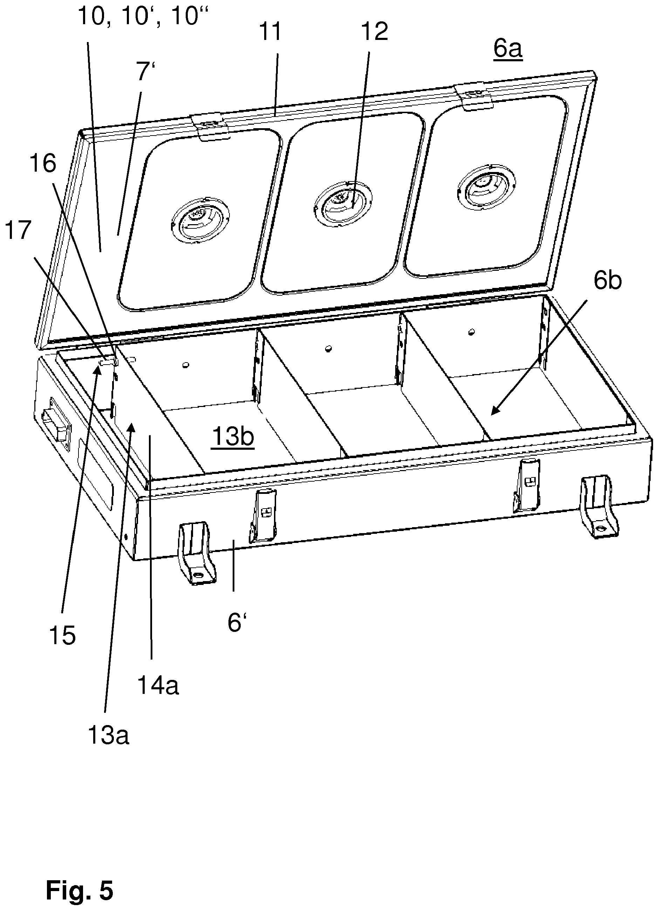

Fig. 5 zeigt, dass ein Gehäuse 6' einen Deckel 11 aufweist, an dessen innerer Wandung 7' die Isolierverkleidung 10, 10', 10" angeordnet ist.

Fig. 5 zeigt konkret ein Batteriegehäuse, welches einen Deckel 11 aufweist, in dem Ventile 12 zum Druckausgleich und/oder Drucküberlastabbau angeordnet sind. Ein Ventil 12 zum Druckausgleich und/ oder Drucküberlastabbau kann Überdrücke im Inneren 6b des Batteriegehäuses durch eine Fluidleitung in die

Atmosphäre 6a abbauen und weist ein intumeszierendes Material auf, welches im Brandfall die Fluidleitung verschließt. Die dem Inneren 6b zugewandte Seite des Deckels 11 ist mit einer Isolierverkleidung 10, 10', 10" versehen. So kann die Qualität des Brandschutzes noch weiter verbessert werden.

Das Innere 6b des Batteriegehäuses ist in Kammern 13a, 13b unterteilt, die durch Kammerwände 14a voneinander abgetrennt sind. In den Kammern 13a, 13b sind nicht gezeigte Batteriezellen angeordnet.

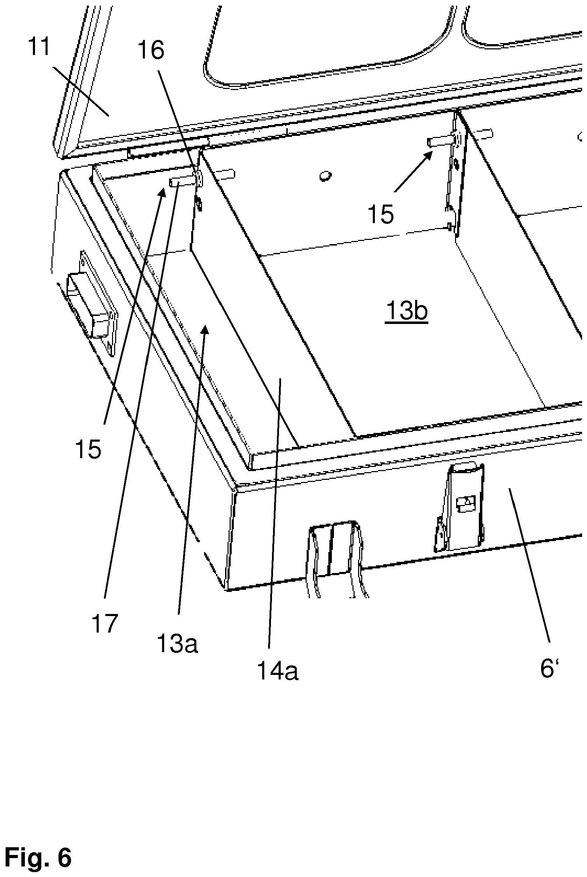

Fig. 5 und 6 zeigen, dass eine Kabeldurchführung 15 des Batteriegehäuses einen Dichtkörper 16 umfasst, der einen Durchgang für ein Kabel 17 oder eine Leitung aufweist. Fig. 5 zeigt mit Bezug zur Kammerwand 14a, dass der Dichtkörper 16 ein intumeszierendes Material aufweist oder aus einem solchen Material gefertigt ist. Im Brandfall kann der Dichtkörper 16 den Durchbruch durch die Kammerwand 14a für das zersetzte oder verbrannte Kabel 17 feuerfest verschließen.

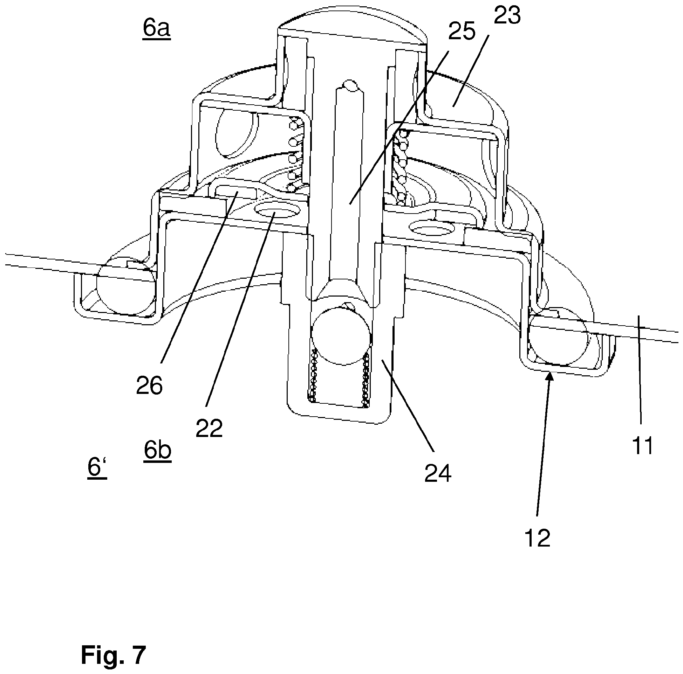

Fig. 7 zeigt, dass das Batteriegehäuse einen Deckel 11 aufweist, in dem mindestens ein Ventil 12 zum Druckausgleich und/oder Drucküberlastabbau angeordnet ist.

Das Ventil 12 zum Druckausgleich und/ oder Drucküberlastabbau kann Überdrücke im Inneren 6b des Batteriegehäuses durch eine Fluidleitung 22 in die Atmosphäre 6a abbauen und weist eine gegen eine Federkraft abhebbare Dichtung 26 aus intumeszierendem Material auf, welches im Brandfall die Fluidleitung 22 verschließt.

Fig. 7 zeigt konkret ein Ventil 12 zum Druckausgleich und/ oder Drucküberlastabbau für das Batteriegehäuse, umfassend ein Gehäuse mit einem der Atmosphäre 6a zugewendeten ersten Abschnitt 23 und einem dem Inneren 6b des Batteriegehäuses zugewendeten zweiten Abschnitt 24, wobei die beiden Abschnitte 23, 24 absperrbar fluidleitend miteinander verbunden sind.

Es ist mindestens ein Teilventil vorgesehen, welches thermisch aktivierbar ist, um eine druckabbauende Fluidleitung 22 zwischen dem ersten Abschnitt 23 und dem zweiten Abschnitt 24 im Brandfall abzusperren.

Konkret ist ein erstes Teilventil vorgesehen, welches thermisch aktivierbar ist, um eine erste, druckausgleichende Fluidleitung 25 zwischen dem ersten Abschnitt 23 und dem zweiten Abschnitt 24 abzusperren.

Konkret ist des Weiteren ein zweites Teilventil vorgesehen, welches thermisch aktivierbar ist, um eine zweite, druckabbauende Fluidleitung 22 zwischen dem ersten Abschnitt 23 und dem zweiten Abschnitt 24 abzusperren.

Die erste Fluidleitung 25 ist im Normalbetrieb permanent zum Druckausgleich zwischen Atmosphäre 6a und dem Inneren 6b des Batteriegehäuses geöffnet und nur durch thermische Beaufschlagung verschließbar. Die zweite Fluidleitung 22 wird im Brandfall verschlossen und ist im Normalfall durch Freigeben eines Dichtsitzes zum Abbau höherer Drücke freigebbar.

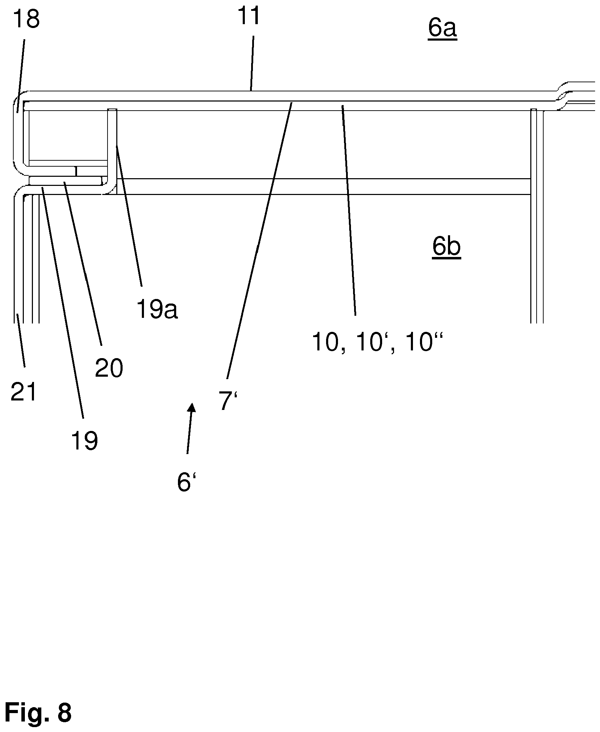

Fig. 8 zeigt, dass zwischen einem Randbereich oder Randwulst 18 des Deckels 11 und einer Anlagefläche 19 einer Wand des Gehäuses 6' eine IP-Dichtung 20 angeordnet ist. Die IP-Dichtung 20 ist im Gehäuse 6' verklemmt. Die IP Dichtung 20 kann auch eingeklebt oder in anderer Weise befestigt sein.

Konkret ist der Deckel 11 im Randbereich U-förmig gebogen, so dass ein Schenkel des U die IP-Dichtung 20 gegen die Anlagefläche 19 pressen kann, die Anlagefläche 19 ist als Plateau einer S-förmigen Oberkante einer Wand 21, hier einer Außenwand des Gehäuses 6', ausgestaltet.

Von der Anlagefläche 19 der Wand 21 ragt nach oben in Richtung Deckel 11 ein Schenkel 19a ab, der die IP-Dichtung 20 von der Isolierverkleidung 10, 10', 10" abtrennt und an der Isolierverkleidung 10, 10', 10" unter Ausbildung einer Dichtkante anliegt.

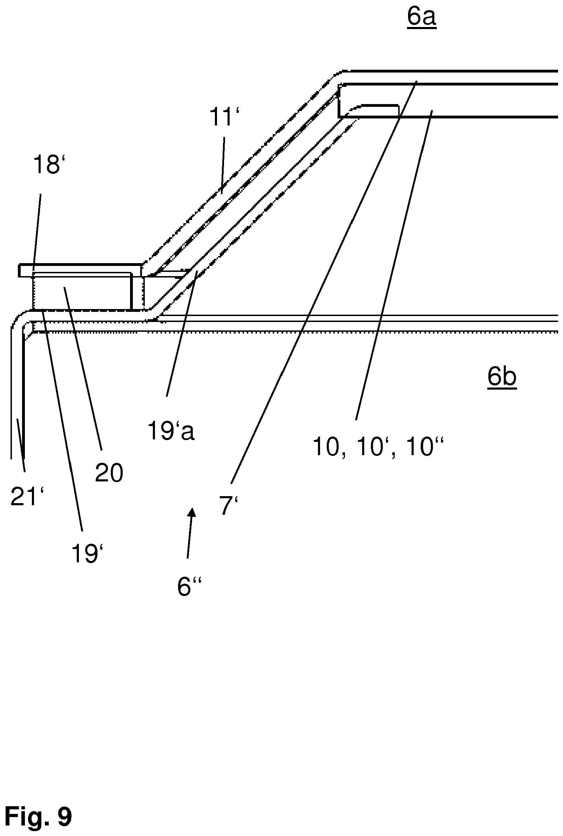

Fig. 9 zeigt, dass zwischen einem Randbereich 18' eines weiteren Deckels 11' und einer Anlagefläche 19' einer Wand 21' eines weiteren Gehäuses 6" eine IP-Dichtung 20 angeordnet ist. Die IP-Dichtung 20 ist im Gehäuse 6" verklemmt. Die IP Dichtung 20 kann auch eingeklebt oder in anderer Weise befestigt sein.

Von der Anlagefläche 19' der Wand 21' ragt nach oben in Richtung Deckel 11' ein Schenkel 19'a ab, der an der Isolierverkleidung 10, 10', 10" unter Ausbildung einer Dichtkante oder einer Dichtfläche anliegt. Durch den Schenkel 19'a der Wand 21', den Deckel 11', die IP-Dichtung 20 und die Isolierverkleidung 10, 10', 10" wird ein Hohlraum gebildet. Der Deckel 11' ist an seinem Rand abschnittsweise parallel zur Anlagefläche 19' und dem Schenkel 19'a ausgebildet.

### Bezugszeichen

- 1: erste Schicht
- 2: zweite Schicht
- 2a: thermisch aktivierbares Material
- 3: dritte Schicht
- 4: Gewebe aus Glasfasern
- 5: Klebemittel
- 6, 6', 6": Gehäuse oder Batteriegehäuse
- 6a: Atmosphäre
- 6b: Inneres von 6'
- 7: innere Wandung von 6
- 7': innere Wandung von 6'
- 8: Gehäuseinnenraum
- 10, 10', 10": Isolierverkleidung
- 11,11': Deckel
- 12: Ventil (Druckausgleich, Drucküberlastabbau)
- 13a, b: Kammer von 6'
- 14a: Kammerwand
- 15: Kabeldurchführung
- 16: Dichtkörper von 15
- 17: Kabel
- 18: Randwulst von 11
- 18': Randbereich von 11'
- 19, 19': Anlagefläche von 6', 6"
- 19a, 19'a: Schenkel von 19, 19' bzw. von 21,21'
- 20: IP-Dichtung
- 21, 21: Wand von 6', 6"
- 22: zweite Fluidleitung von 12
- 23: erster Abschnitt von 12
- 24: zweiter Abschnitt von 12
- 25: erste Fluidleitung von 12
- 26: Dichtung von 12

## Patentansprüche

1. Gehäuse (6, 6', 6"), umfassend mindestens eine innere Wandung (7, 7'), wobei an der inneren Wandung (7, 7') eine Isolierverkleidung (10, 10', 10") zum Ausrüsten des Gehäuses (6, 6', 6") angeordnet ist, wobei die Isolierverkleidung (10, 10', 10") mindestens zwei Schichten (1, 2, 3, 4) umfasst, wobei eine erste Schicht (1) mit einer zweiten Schicht (2) verbunden ist, wobei die zweite Schicht (2) ein thermisch aktivierbares Material (2a) aufweist und wobei das thermisch aktivierbare Material (2a) unter Einwirkung von Wärme und/ oder Hitze und/ oder Feuer sein Volumen verändert,
**dadurch gekennzeichnet, dass**
das Gehäuse (6') mindestens ein Ventil (12) zum Druckausgleich und/ oder Drucküberlastabbau aufweist, welches ein intumeszierendes Material zum Verschließen einer Fluidleitung aufweist, und/ oder dass das Gehäuse (6') mindestens eine Kabeldurchführung (15) aufweist, welche ein intumeszierendes Material zum Verschließen eines Durchbruchs für ein Kabel (17) aufweist,

2. Gehäuse nach Anspruch 1, **dadurch gekennzeichnet, dass** eine dritte Schicht (3) vorgesehen ist, wobei die zweite Schicht (2) zwischen der ersten Schicht (1) und der dritten Schicht (3) sandwichartig aufgenommen ist.

3. Gehäuse nach Anspruch 1 oder 2, **dadurch gekennzeichnet, dass** mindestens eine Schicht (1, 3, 4) als Gewebe oder Matte ausgestaltet ist, welche Mineralfasern und/ oder nicht brennbare Fasern aufweist.

4. Gehäuse nach Anspruch 3, **dadurch gekennzeichnet, dass** die erste Schicht (1) als Gewebe oder Matte aus Glasfasern oder hochtemperaturbeständigen Materialien ausgestaltet ist und dass die dritte Schicht (3) als Gewebe oder Matte aus Glasfasern oder hochtemperaturbeständigen Materialien ausgestaltet ist.

5. Gehäuse nach einem der voranstehenden Ansprüche, **dadurch gekennzeichnet, dass** mindestens eine dem Gehäuseinnenraum (8, 6b) zugewandte Schicht (3) elektrisch nicht leitend ist und/ oder dass diese Schicht (3) als elektrisch nicht leitende Folie ausgestaltet ist

6. Gehäuse nach einem der voranstehenden Ansprüche, **dadurch gekennzeichnet, dass** das thermisch aktivierbare Material (2a) als intumeszierendes Material ausgestaltet ist

7. Gehäuse nach einem der voranstehenden Ansprüche, **dadurch gekennzeichnet, dass** mehrere Schichten (2) mit thermisch aktivierbarem Material (2a) vorgesehen sind,

8. Gehäuse nach Anspruch 7, **dadurch gekennzeichnet, dass** zwei Schichten (2) mit thermisch aktivierbarem Material (2a) durch mindestens ein Gewebe oder eine Matte getrennt sind, wobei das Gewebe oder die Matte Mineralfasern und/ oder nicht brennbare Fasern aufweist.

9. Gehäuse nach einem der voranstehenden Ansprüche, **dadurch gekennzeichnet, dass** ein Klebemittel (5) vorgesehen ist, mittels welchem die Isolierverkleidung (10) an einer Wandung (7, 7') fixierbar ist, wobei das Klebemittel (5) einer äußeren Schicht (1) der Isolierverkleidung (10) zugeordnet ist oder als eigenständige Lage ausgestaltet ist.

10. Gehäuse nach Anspruch 9, **dadurch gekennzeichnet, dass** das Klebemittel (5) selbstklebend ausgestaltet und/ oder als Hochtemperaturkleber ausgestaltet ist.

11. Gehäuse nach einem der voranstehenden Ansprüche, **gekennzeichnet durch** eine Ausgestaltung als Batteriegehäuse, in dessen Gehäuseinnenraum (8, 6b) Batterien anordenbar oder aufnehmbar sind.

12. Gehäuse nach einem der voranstehenden Ansprüche, **dadurch gekennzeichnet, dass** das Gehäuse (6', 6") einen Deckel (11, 11') aufweist, an dessen innerer Wandung (7') die Isolierverkleidung (10, 10', 10'') angeordnet ist und/ oder dass das Gehäuse (6', 6") einen Deckel (11, 11') aufweist, an dessen innerer Wandung (7') die Isolierverkleidung (10, 10', 10") angeordnet ist, wobei ein Schenkel (19a, 19'a) einer Wand (21, 21') des Gehäuses (6', 6") unter Ausbildung einer Dichtkante oder einer Dichtfläche an der lsolierverkleidung (10, 10', 10") anliegt.

13. Gehäuse nach Anspruch 12, **dadurch gekennzeichnet, dass** zwischen einem Randbereich (18') oder Randwulst (18) des Deckels (11,11') und einer Anlagefläche (19, 19') einer Wand (21, 21') des Gehäuses (6', 6") eine IP-Dichtung (20) angeordnet ist und/ oder dass die IP-Dichtung (20) im Gehäuse (6') verklemmt oder verschraubt ist.

## Claims

1. Housing (6, 6', 6") comprising at least one inner wall (7, 7'), where insulating lining (10, 10', 10") for fitting out the housing (6, 6', 6") is arranged on the inner wall (7, 7'), where the insulating lining (10, 10', 10") comprises at least two layers (1, 2, 3, 4), where a first layer (1) is joined to a second layer (2), where the second layer (2) comprises a thermally activatable material (2a) and where the thermally activatable material (2a) changes its volume under the action of warmth and/or heat and/or fire,
**characterized in that** the housing (6') has at least one valve (12) for pressure equilibration and/or overpressure release which comprises an intumescent material for closing a fluid conduit and/or the housing (6') has at least one cable feed-through (15) which comprises an intumescent material for closing an opening for a cable (17) .

2. Housing according to Claim 1, **characterized in that** a third layer (3) is provided and the second layer (2) is accommodated in a sandwich-like manner between the first layer (1) and the third layer (3).

3. Housing according to Claim 1 or 2, **characterized in that** the at least one layer (1, 3, 4) is configured as woven fabric or mat which comprises mineral fibres and/or nonflammable fibres.

4. Housing according to Claim 3, **characterized in that** the first layer (1) is configured as woven fabric or mat composed of glass fibres or high-temperature-resistant materials and **in that** the third layer (3) is configured as woven or fabric mat composed of glass fibres or high-temperature-resistant materials.

5. Housing according to any of the preceding claims, **characterized in that** at least one layer (3) facing the interior (8, 6b) of the housing is electrically nonconductive and/or **in that** this layer (3) is configured as electrically nonconductive film.

6. Housing according to any of the preceding claims, **characterized in that** the thermally activatable material (2a) is configured as intumescent material.

7. Housing according to any of the preceding claims, **characterized in that** a plurality of layers (2) comprising thermally activatable material (2a) are provided.

8. Housing according to Claim 7, **characterized in that** two layers (2) comprising thermally activatable material (2a) are separated by at least one woven fabric or a mat, where the woven fabric or the mat comprises mineral fibres and/or nonflammable fibres.

9. Housing according to any of the preceding claims, **characterized in that** an adhesive (5) by means of which the insulating lining (10) can be fixed to a wall (7, 7') is provided, where the adhesive (5) is assigned to an outer layer (1) of the insulating lining (10) or is configured as independent layer.

10. Housing according to Claim 9, **characterized in that** the adhesive (5) is self-adhesive and/or is configured as high-temperature adhesive.

11. Housing according to any of the preceding claims, **characterized by** a configuration as battery housing in the housing interior (8, 6b) of which batteries can be arranged or can be accommodated.

12. Housing according to any of the preceding claims, **characterized in that** the housing (6', 6") has a lid (11, 11') on the inner wall (7') of which the insulating lining (10, 10', 10") is arranged and/or **in that** the housing (6', 6") has a lid (11, 11') on the inner wall (7') of which the insulating lining (10, 10', 10") is arranged, where an arm (19a, 19'a) of a wall (21, 21') of the housing (6', 6") rests against the insulating lining (10, 10', 10") to form a sealing edge or sealing area.

13. Housing according to Claim 12, **characterized in that** an IP seal (20) is arranged between a peripheral region (18') or peripheral beading (18) of the lid (11, 11') and a contact area (19, 19') of a wall (21, 21') of the housing (6', 6") and/or **in that** the IP seal (20) is clamped or screwed in the housing (6').

## Revendications

1. Boîtier (6, 6', 6''), comprenant au moins une paroi intérieure (7, 7'), un habillage isolant (10, 10', 10'') pour l'apprêtage du boîtier (6, 6', 6'') étant agencé sur la paroi intérieure (7, 7'), l'habillage isolant (10, 10', 10'') comprenant au moins deux couches (1, 2, 3, 4), une première couche (1) étant reliée avec une deuxième couche (2), la deuxième couche (2) comprenant un matériau activable thermiquement (2a) et le matériau activable thermiquement (2a) modifiant son volume sous l'action de chaleur et/ou de chaleur forte et/ou de feu, **caractérisé en ce que**
le boîtier (6') comprend au moins une soupape (12) pour l'égalisation de pression et/ou la réduction de surpression, qui comprend un matériau intumescent pour la fermeture d'une conduite de fluide, et/ou **en ce que** le boîtier (6') comprend au moins un passage de câble (15), qui comprend un matériau intumescent pour la fermeture d'une percée pour un câble (17).

2. Boîtier selon la revendication 1, **caractérisé en ce qu'**une troisième couche (3) est prévue, la deuxième couche (2) étant logée en sandwich entre la première couche (1) et la troisième couche (3).

3. Boîtier selon la revendication 1 ou 2, **caractérisé en ce qu'**au moins une couche (1, 3, 4) est configurée sous la forme d'un tissu ou d'un mat, qui comprend des fibres minérales et/ou des fibres non combustibles.

4. Boîtier selon la revendication 3, **caractérisé en ce que** la première couche (1) est configurée sous la forme d'un tissu ou d'un mat en fibres de verre ou matériaux résistants aux températures élevées, et **en ce que** la troisième couche (3) est configurée sous la forme d'un tissu ou d'un mat en fibres de verre ou matériaux résistants aux températures élevées.

5. Boîtier selon l'une quelconque des revendications précédentes, **caractérisé en ce qu'**au moins une couche (3) tournée vers l'espace intérieur de boîtier (8, 6b) est non conductrice électriquement et/ou **en ce que** cette couche (3) est configurée sous la forme d'une feuille non conductrice électriquement.

6. Boîtier selon l'une quelconque des revendications précédentes, **caractérisé en ce que** le matériau activable thermiquement (2a) est configuré sous la forme d'un matériau intumescent.

7. Boîtier selon l'une quelconque des revendications précédentes, **caractérisé en ce que** plusieurs couches (2) munies d'un matériau activable thermiquement (2a) sont prévues.

8. Boîtier selon la revendication 7, **caractérisé en ce que** deux couches (2) munies d'un matériau activable thermiquement (2a) sont séparées par au moins un tissu ou un mat, le tissu ou le mat comprenant des fibres minérales et/ou des fibres non combustibles.

9. Boîtier selon l'une quelconque des revendications précédentes, **caractérisé en ce qu'**un agent collant (5) est prévu, au moyen duquel l'habillage isolant (10) peut être fixé sur une paroi (7, 7'), l'agent collant (5) étant associé à une couche extérieure (1) de l'habillage isolant (10) ou étant configuré sous la forme d'une strate indépendante.

10. Boîtier selon la revendication 9, **caractérisé en ce que** l'agent collant (5) est configuré sous forme autocollante et/ou est configuré sous la forme d'une colle à température élevée.

11. Boîtier selon l'une quelconque des revendications précédentes, **caractérisé par** une configuration sous la forme d'un boîtier de batterie, dans l'espace intérieur de boîtier (8, 6b) duquel des batteries peuvent être agencées ou logées.

12. Boîtier selon l'une quelconque des revendications précédentes, **caractérisé en ce que** le boîtier (6', 6'') comprend un couvercle (11, 11') sur la paroi intérieure (7') duquel l'habillage isolant (10, 10', 10'') est agencé et/ou **en ce que** le boîtier (6', 6'') comprend un couvercle (11, 11') sur la paroi intérieure (7') duquel l'habillage isolant (10, 10', 10'') est agencé, une patte (19a, 19'a) d'une paroi (21, 21') du boîtier (6', 6'') reposant sur l'habillage isolant (10, 10', 10'') en formant un bord d'étanchéité ou une surface d'étanchéité.

13. Boîtier selon la revendication 12, **caractérisé en ce qu'**un joint IP (20) est agencé entre une zone de bord (18') ou un bourrelet de bord (18) du couvercle (11, 11') et une surface d'appui (19, 19') d'une paroi (21, 21') du boîtier (6', 6''), et/ou **en ce que** le joint IP (20) est bloqué ou vissé dans le boîtier (6').
